# EUROPEAN PATENT SPECIFICATION

(11) **EP 1 101 262 B1**
(45) Date of publication and mention of the grant of the patent: **05.03.2014**
(21) Application number: 00940283.5
(22) Date of filing: 25.05.2000
(51) Int. Cl.: H02B 5/00

(54) **ELECTRIC SUBSTATION**
ELEKTRISCHE UNTERSTATION
SOUS-STATION ELECTRIQUE

(30) Priority: 27.05.1999 IT MI991177
(43) Date of publication of application: 23.05.2001
(73) Proprietor: ABB S.p.A., 20124 Milano (IT)
(72) Inventor: PIAZZA COSTANTE, I-26900 Lodi (IT); GUERRA, Giuliano, I-15067 Novi Ligure (IT)
(74) Representative: Giavarini, Francesco
(86) International application number: PCT/EP2000/004916
(87) International publication number: WO 2000/074189

(56) References cited:
- FR-A- 2 251 115
- JP-A- 56 107 717
- US-A- 5 777 842
- US-A- 5 796 060

## Description

The present invention relates to an electric power transmission and distribution substation for high- and/or medium-voltage applications, i.e. for voltages greater than 1000Volt.

More particularly, the present invention relates to an electric power substation with a dual three-phase system of bus bars which differs from known types of substation in the simplicity and compactness of its constructive structure and is thus optimized in its functions and economically advantageous.

It is known from the state of the art that electric power substations with a dual three-phase system of bus bars use two separate sets of three bars which are supported by a supporting structure, typically a supporting portal, and are electrically connected to a three-phase power supply line. In particular, two bars are connected to each phase of the power supply line: a first bar belongs to a first set of three and a second bar belongs to the second set of three. The substation is furthermore provided with one or more power and/or distribution transformers and with a series of primary components, such as for example disconnectors, circuit breakers, instrument transformers, et cetera, and of secondary components, for example bus bar protectors, overcurrent protectors, et cetera. Said primary and secondary components allow to provide the necessary electrical connections among the various parts of the substation and ensure their correct operation.

The adoption of a dual three-phase system of bus bars is particularly advantageous in that it allows high flexibility and reliability in applications and allows in particular to operate a load which is connected to the substation even when one bar system is offline; furthermore, indeed because of the redundancy of the dual bus bar system, it is possible to perform the necessary maintenance operations without having to put the entire substation offline.

However, in the current state of the art, the constructive architectures according to which substations are manufactured have drawbacks.

In particular, a typical configuration of a substation with a dual three-phase bar system arranges the two sets of three bars so that they are parallel to each other and aligned on a horizontal plane; accordingly, the various devices connected to the bars of a same phase must be arranged so that they are distributed along the longitudinal extension of said bars. This entails a considerable increase in space occupation and in the overall dimensions of the substation, with a consequent negative impact on installation costs and on environmental impact.

The fact also cannot be ignored that the large number of primary components used in known types of substation inherently contributes to an increase in the space occupation and costs of the substation. Furthermore, since said components are usually individual independent elements, the corresponding maintenance requirements are as a whole demanding. An electric power transmission and distribution substation including bus bars is disclosed in FR 2 251 115.

The aim of the present invention is to provide an electric power transmission and distribution substation for high- and/or medium-voltage applications which has a compact structure and reduced dimensions, so as to significantly reduce the space occupation required with respect to known substations.

Within the scope of this aim, an object of the present invention is to provide an electric power transmission and distribution substation for high- and/or medium-voltage applications whose constructive architecture allows to reduce environmental visual impact and installation costs.

Another object of the present invention is to provide an electric power transmission and distribution substation for high- and/or medium-voltage applications which allows to optimize the execution of electrical switching operations and to increase flexibility in applications with respect to known types of substation.

Another object of the present invention is to provide an electric power transmission and distribution substation for high- and/or medium-voltage applications which allows to reduce maintenance requirements with respect to known types of substation.

Another object of the present invention is to provide an electric power transmission and distribution substation for high- and/or medium-voltage applications which is highly reliable, relatively easy to manufacture and at competitive costs.

This aim, these objects and others which will become apparent hereinafter are achieved by an electric power transmission and distribution substation for high-and/or medium-voltage applications according to claim 1.

The substation according to the invention therefore has an optimized configuration in which the space required and the overall dimensions are reduced considerably with respect to known types of substation.

Further characteristics and advantages of the invention will become apparent from the description of preferred but not exclusive embodiments of the substation according to the invention, illustrated only by way of non-limitative example in the accompanying drawings, wherein:
Figure 1 is a schematic front view of a first possible configuration of the connection between two sets of three bus bars and a plurality of interruption and disconnection devices used in the substation according to the invention;
Figure 2 is a schematic front view of a second possible configuration of the connection between two sets of three bus bars and a plurality of interruption and disconnection devices used in the substation according to the invention;
Figure 3 is a top view of the substation of Figure 1;
Figure 4 is a view of a possible embodiment of an interruption and disconnection device which can be used in the substation according to the invention.

With reference to the above figures, the electrical substation according to the invention comprises two sets of three bus bars (L1, L2, L3), designated by the reference numerals 200 and 300 respectively.

Advantageously, in the substation according to the invention, the two sets of three bus bars 200 and 300 are mutually aligned on a substantially vertical plane 101 and are electrically connected to suitable interruption and disconnection devices which are generally designated by the reference numeral 150, in the manner described in greater detail hereinafter; said devices are suitable to ensure the necessary connections between a three-phase power line, not shown in the figures, by which the substation is powered, and the various parts that compose said substation.

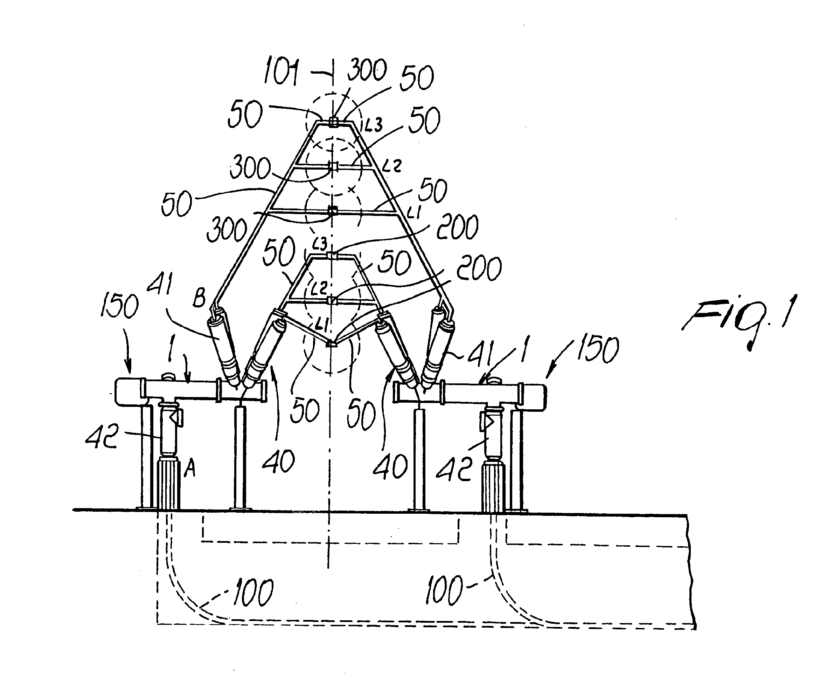

In particular, each phase of the power supply line uses two interruption and disconnection devices 150, as shown schematically in Figures 1-3; possible embodiments of interruption and disconnection devices 150 which can be used in the electrical substation according to the invention are described in the International patent applications no. PCT/EP99/07915 and no. PCT/EP99/07914.

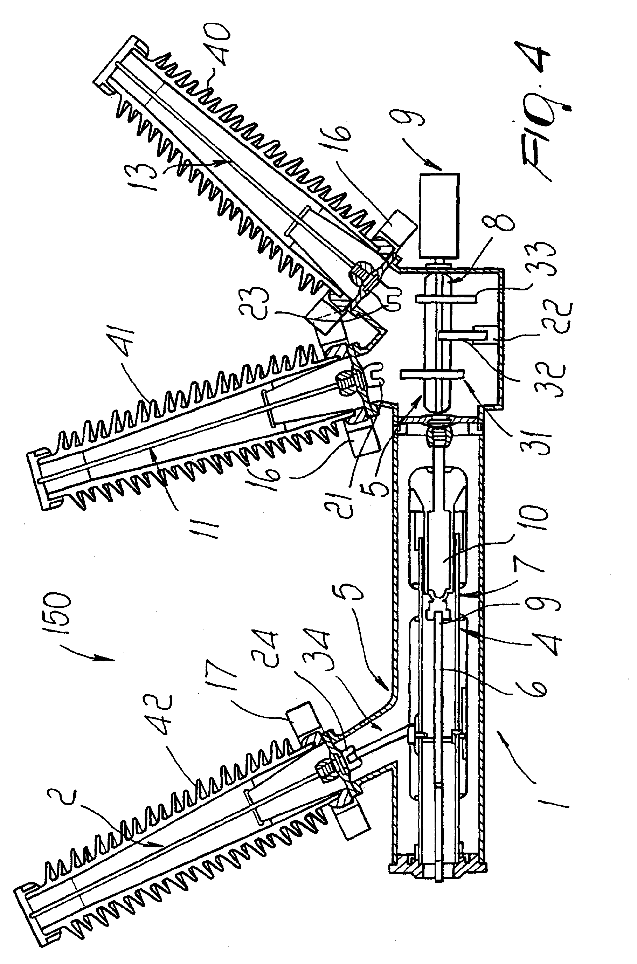

In particular, as shown in detail in Figure 4, each interruption and disconnection device 150 comprises an enclosure 1 provided with three bushings: a first bushing 40 which accommodates a first connection terminal 13, a second bushing 41 which accommodates a second connection terminal 11, and a third bushing 42 which accommodates a third connection terminal 2; said connection terminals allow to provide the electrical connections in input and output to the devices 150. In the embodiment shown in Figure 4, the third bushing 42 is arranged, with respect to the enclosure 1, so that it is orientated in the same direction as the first and second bushings 40 and 41; in a fully equivalent manner, as shown in Figures 1-3, the third bushing 42 can be arranged so as to be orientated in the opposite direction with respect to the bushings 40 and 41. The enclosure 1, which contains an insulating fluid, for example a gas, accommodates an interruption unit 4, to which the third connection terminal 2 is electrically connected, and a disconnection unit 5; said disconnection unit and said interruption unit allow to perform the necessary switching operations, in the manner described hereinafter. In particular, the interruption unit 4 comprises an interruption chamber 7 which contains a fixed contact 10 and a moving contact 9; in turn, the disconnection unit 5 comprises a first fixed contact 23, a second fixed contact 21 and a third fixed contact 24, each of which is connected to a corresponding connection terminal, designated by the reference numerals 13, 11 and 2 respectively, and a first moving contact 33, a second moving contact 31 and a third moving contact 34, which can be coupled to the corresponding fixed contacts. Furthermore, the disconnection unit 5 comprises a fourth fixed contact 22 at ground voltage, which can be coupled to a corresponding fourth moving contact 32, and a fifth fixed contact at ground voltage, not shown, which is located in the vicinity of said third moving contact 34 and can be coupled electrically thereto.

In the embodiment of the substation according to the invention shown in Figures 1-3, the two interruption and disconnection devices 150 associated with a same phase of the power supply line both have a first connection terminal 13 which is connected to a first bar (L1 or L2 or L3), which belongs to the first set of three 200, and a second connection terminal 11 which is connected to a corresponding second bar (L1, L2 or L3), which belongs to the second set of three 300. The third connection terminal 2 of each one of the two interruption and disconnection devices 150 is furthermore connected respectively in input to the phase of the power supply line for a first device 150 and in output to a power transformer or to a second power supply line, not shown in the figure, as regards the second device 150. As shown schematically in Figures 1, 2 and 3, the connections between the third terminal 2 of a first interruption and disconnection device 150 and the phase of the main power supply line, and between the power and/or distribution transformer (or a second power supply line) and the third terminal 2 of the second interruption and disconnection device 150, can be provided by using buried cables 100; alternatively, the connections can be provided by means of air-insulated bars according to a solution which is widely known in the art.

In this manner, each phase of the power supply line is connected to two bus bars (L1, L2, L3), of which a first bar belongs to a first set of three 200 and a second bar belongs to a second set of three 300; three pairs of corresponding bars (L1-L1, L2-L2, L3-L3) having mutually identical phases are thus provided between the two sets of three 200 and 300.

By virtue of the alignment of the two sets of three bars on the vertical plane 101, the interruption and disconnection devices 150, which must be connected in pairs to two different bus bars, can be arranged in a mutually opposite configuration in a position which is substantially symmetrical with respect to said vertical plane 101; accordingly, the space required for these connections is reduced considerably with respect to known types of solution, thus allowing to have a substation whose overall dimensions are reduced considerably.

Another significant advantage of the substation according to the invention is the fact that the connections between each bus bar (L1, L2, L3) and the corresponding connection terminals of the interruption and disconnection devices 150 are provided by means of a system of connecting rods 50. In particular, each one of said rods 50 has, for example, a tubular body which is made of conducting material and has a first end which is connected to a bus bar (L1, L2, L3) and a second end which is electrically connected to the corresponding connection terminal and is mechanically rigidly coupled to the bushing that accommodates said connection terminal. Said connections can be provided by means of suitable junctions, or by using suitable terminals made of conducting material; an example of terminals which can be used in the substation according to the invention and of the execution of the connections between rods and bars and between rods and bushings is described in European patent application no. EP 085 6928A. Furthermore, the connecting rod 50 have a shape and dimensions by virtue of which they structurally support the two sets of three bars 200 and 300, at the same time maintaining the necessary dielectric distance between two adjacent bars.

In this manner, the rods 50 simultaneously act as an electrical connection element and as a structural component for supporting said bars; as shown in Figure 1, with this solution it is therefore possible to eliminate the bar supporting portal commonly used in known types of substation, with a consequent benefit from the economic point of view and from the point of view of visual impact, which is reduced significantly.

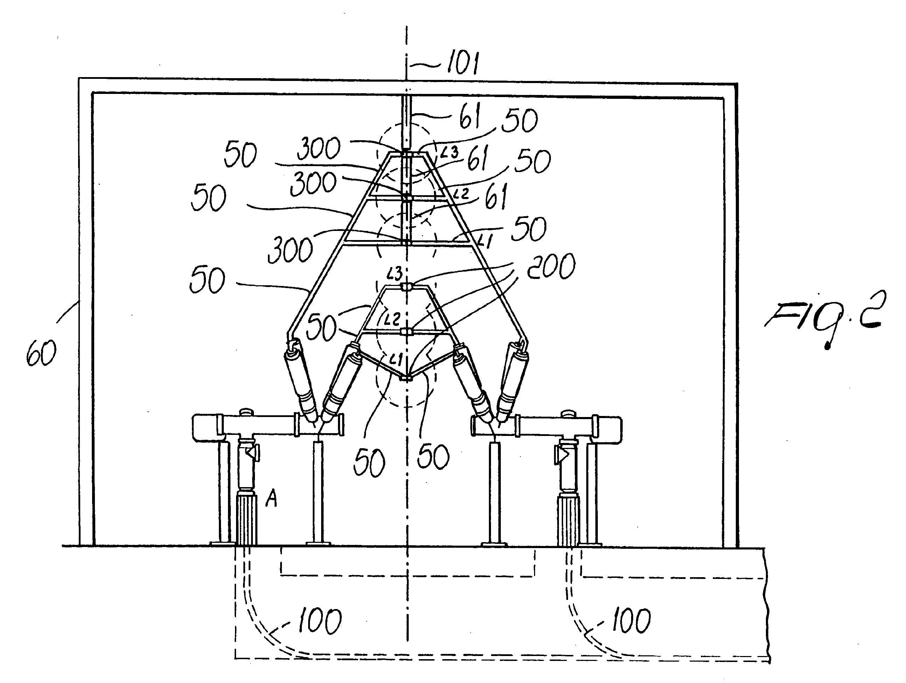

Alternatively, if required by the application, it is possible to have a first set of three bars 200 which is supported only by the connecting rods 50, as described above, and to use a supporting portal 60 which is suitable to assist the rods 50 in supporting the second set of three bars 300, as shown in Figure 2; in this case the connection between the portal and the bars is provided by means of insulators 61.

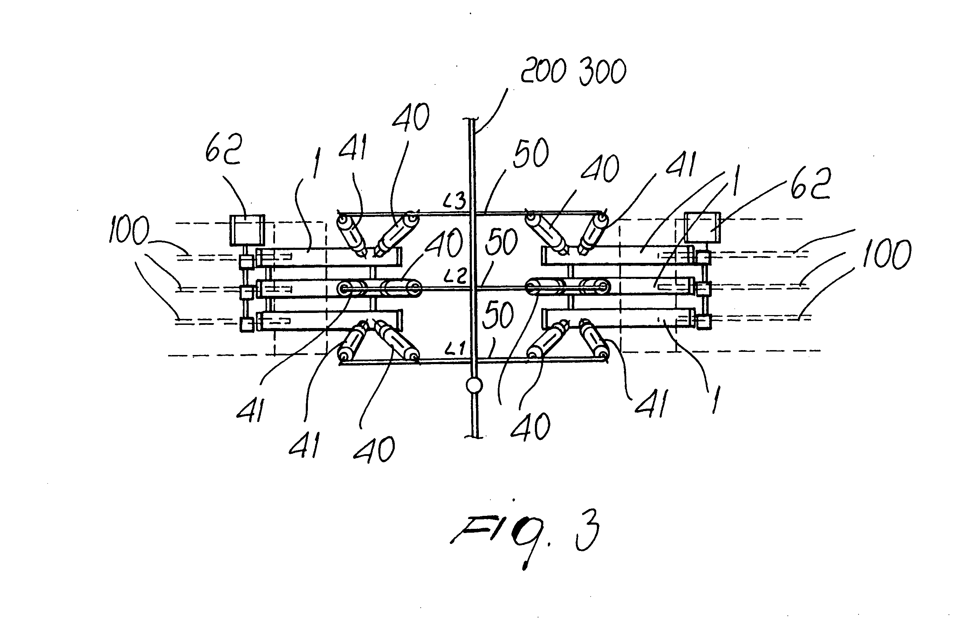

Further advantages of the substation according to the invention lie in the use of the devices 150, which allow to combine in a single component the disconnection and interruption functions and to optimize the execution of electrical switching operations with a constructive architecture which is at the same time compact and effective. In particular, as shown in Figure 4, the moving contact 9 of the interruption unit 4 is connected to an actuation rod 6 which is in turn connected to an actuation and control device, schematically designated in Figure 3 by the reference numeral 62. Said actuation and control device allows to actuate the interruption unit 4 and can be constituted for example by a mechanical or hydraulic or oleopneumatic or electric actuator; in particular, it is possible to use actuation devices 62 for each phase or, according to a preferred embodiment shown in Figure 3, there is a single actuation device for all three power supply phases. Preferably, in the substation according to the invention, the actuation and control device comprises a rotary motor with a position sensor, for example a rotary servomotor with a position sensor. In this case, the connection between the motor and the moving contact occurs by means of a kinematic pair which is capable of converting the rotary motion of the motor shaft into a translatory motion of the moving contact. Examples of possible embodiments of this connection are described in International patent applications no. PCT/EP99/03372 and PCT/EP99/05363 whose descriptions are to be assumed included herein by reference.

In turn, the disconnection unit 5 furthermore comprises a rotary switching element which is constituted, for example as shown in Figure 4, by a rotating shaft 8 which is actuated by actuators which are schematically represented by the unit 9; said actuators can comprise an electric motor which is conveniently controlled, preferably a servomotor.

The use of a servomotor allows precise control of the position of the actuation element and to optimize both the execution times of the disconnection and interruption operations and the energy consumption that they entail.

In the embodiment shown in Figure 4, the first moving contact 33, the second moving contact 31 and the fourth moving contact 32 are electrically connected to the interruption unit 4 and are constituted, for example, by blades which have a profile shaped like a circular sector, are keyed on the shaft 8 and rotate rigidly with it. Said contacts are arranged so that each one couples to a corresponding fixed contact, designated by the reference numerals 23, 21 and 22 respectively; said contacts are furthermore fixed to the shaft 8 with such a mutual angular position that the moving contact 32 cannot be coupled to the fixed contact 22 when the moving contact 31 and/or the moving contact 33 are coupled to the corresponding fixed contacts 21 and 23.

The disconnection operation related to the side for the connection of the bars and the devices 150 occurs by turning the shaft 8; accordingly, the moving contacts 31, 32 and 33 rigidly coupled thereto couple/uncouple with respect to the respective fixed contacts 21, 22 and 23 according to the operating requirements and with great practical flexibility. For example, it is possible to disconnect the connections with both sets of three bars or at only one set of three bars and keep the second set of three active.

In turn, the third moving contact 34, which can be for example of the piston or rack type, is preferably fixed to the enclosure of the chamber 7 and is actuated by a suitable known type of actuation system, not shown in the figures. In this manner, by coupling-uncoupling the moving contact 34 with respect to the third fixed contact 24 or with respect to the fifth fixed contact at ground voltage it is possible to provide connection/disconnection on the side for connection between the device 150 and the transformer 104 and/or between the device 150 and the phase of the line.

Furthermore, it is possible to arrange inside each device 150 suitable instrument transformers, for example two current transformers 16 and a voltage transformer 17; in particular, the current transformers 16 can be arranged at the base of the first bushing 40 and of the second bushing 41, while the current transformer 17 is arranged at the base of the third bushing 42. In this manner, by integrating the primary components inside the interruption and disconnection devices 150 one obtains a compact substation which accordingly occupies even less space than known types of substation; furthermore, the necessary maintenance interventions are reduced significantly. According to another embodiment, not shown in the figures, it is possible to integrate the current and voltage measurement functions in a single component arranged at the base of one or more of the bushings.

According to a particular embodiment, not shown in the figures, the actuator of the disconnection unit 5 is constituted by the enclosure of the interruption chamber 7. In this case, the moving contacts 31, 32, 33 and 34 of the disconnection unit are keyed on the outer surface of the interruption chamber, which can rotate with respect to the enclosure 1 of the device. In this case also, the movement is imparted by actuators which comprise, for example a suitably controlled electric motor. By using this technical solution, the device used in the substation according to the invention is even more compact, since the space occupied by the disconnection unit is distributed within the enclosure 1 along the interruption chamber.

The substation thus conceived is susceptible of numerous modifications and variations, all of which are within the scope of the inventive concept; all the details may furthermore be replaced with other technically equivalent elements. Thus, for example, it is possible to connect to one phase of the line the third terminal 2 of both devices 150 associated with a same phase, so as to have a substation with two inputs, and it is also possible to provide various configurations and other layouts for electrical connection between the various parts that compose the substation, as shown in Figure 3.

In practice, the materials and the dimensions may be any according to the requirements and the state of the art.

## Claims

1. An electric power transmission and distribution substation for high- and/or medium-voltage applications, said substation being connected to a three-phase power supply line, **characterized in that** it comprises:
- a first set of three bus bars (200) and a second set of three bus bars (300) which are mutually aligned on a substantially vertical plane (101); and
- for each phase of the power supply line, a first interruption and disconnection device (150) and a second interruption and disconnection device (150) which comprise an enclosure (1) which comprises a first bushing (40) accommodating a first connection terminal (13), a second bushing (41) accommodating a second connection terminal (11) and a third bushing (42) accommodating a third connection terminal (2) and which contains an interruption unit (4) which has a fixed contact (10) and a moving contact (9), and a disconnection unit (5) which comprises a first fixed contact (23), a second fixed contact (21) and a third fixed contact (24), each of which is connected to a corresponding one of the connection terminals (13, 11, 2), and a first moving contact (33), a second moving contact (31) and a third moving contact (34) which can be coupled to the corresponding fixed contacts, said first and second interruption and disconnection devices (150) being arranged mutually opposite in a substantially symmetrical position with respect to said substantially vertical plane (101) and being electrically connected to a first bus bar and a second bus bar which respectively belong to said first and second sets of three bus bars.

2. The substation according to claim 1, **characterized in that** said first and second interruption and disconnection devices (150) are arranged in a substantially symmetrical position with respect to said vertical plane (101).

3. The substation according to claim 1, **characterized in that** said first and second interruption and disconnection devices (150) both have a first connection terminal (13), which is electrically connected to said first bus bar, and a second connection terminal (11), which is electrically connected to said second bus bar.

4. The substation according to claim 3, **characterized in that** it comprises a plurality of connecting rods (50) which are suitable to structurally support said first and second set of three bus bars (200, 300), each one of said connecting rods being made of a conducting material, so as to provide the electrical connection between a bus bar and the corresponding connection terminal.

5. The substation according to claim 1, **characterized in that** it comprises a supporting portal (60) which is suitable to support said second set of three bus bars (300).

6. The substation according to one or more of the preceding claims, **characterized in that** said first interruption and disconnection device (150) has a third connection terminal (2) which is electrically connected to a phase of the power supply line and said second interruption and disconnection device (150) has a third connection terminal (2) which is electrically connected to a power and/or distribution transformer.

7. The substation according to claim 1, **characterized in that** said disconnection unit (5) comprises a rotating element (8) to which said first and second moving contacts (33, 31) are rigidly fixed, and **in that** said first and second fixed contacts (23, 21) are respectively arranged on the rotation plane of said first and second moving contacts.

8. The substation according to claim 7, **characterized in that** the third moving contact (34) of the disconnection unit (5) is fixed on the enclosure of the interruption chamber (7) of said interruption unit.

9. The substation according to claim 8, **characterized in that** said disconnection unit (5) comprises a fourth moving contact (32), which is rigidly fixed to said rotating element (8), a corresponding fourth fixed contact (22) at ground voltage, which lies on the rotation plane of said fourth moving contact, and a fifth fixed contact at ground voltage, which can be coupled to said third moving contact (34).

10. The substation according to claim 7, **characterized in that** said rotating element (8) is actuated by an electric motor (9).

11. The substation according to claim 1, **characterized in that** it comprises at least one instrument transformer (16, 17) which is arranged inside each one of said first and second interruption and disconnection devices.

## Patentansprüche

1. Stromübertragungs- und Verteilungs-Substation für Hoch- und/oder Mittelspannungsanwendungen, wobei die Substation mit einer Drei-Phasen-Stromzuführleitung verbunden ist, **dadurch gekennzeichnet, dass** sie aufweist:
- einen ersten Satz von drei Sammelleitern (200) und einen zweiten Satz von drei Sammelleitern (300), die zueinander auf einer im Wesentlichen vertikalen Ebene (101) ausgerichtet sind; und
- für jede Phase der Stromzuführleitung eine erste Unterbrechungs- und Trenneinrichtung (150) und eine zweite Unterbrechungs- und Trenneinrichtung (150), die eine Abdeckung (1) aufweisen, die eine erste Buchse (40), die einen ersten Verbindungsanschluss (13) beinhaltet, eine zweite Buchse (41), die einen zweiten Verbindungsanschluss (11) beinhaltet, und eine dritte Buchse (42), die einen dritten Verbindungsanschluss (2) beinhaltet, aufweist und die eine Unterbrechungseinheit (4) beinhaltet, die einen Festkontakt (10) und einen beweglichen Kontakt (9) sowie eine Trenneinheit (5), die einen ersten Festkontakt (23), einen zweiten Festkontakt (21) und einen dritten Festkontakt (24) aufweist, die jeweils mit einem entsprechenden der Verbindungsanschlüsse (13, 11, 2) verbunden sind, und die einen ersten beweglichen Kontakt (33), einen zweiten beweglichen Kontakt (31) und einen dritten beweglichen Kontakt (34) beinhaltet, die an die entsprechenden Festkontakte gekoppelt werden können, wobei die ersten und zweiten Unterbrechungs- und Trenneinrichtungen (150) einander gegenüberliegend in einer im Wesentlichen symmetrischen Position im Verhältnis zu der im Wesentlichen vertikalen Ebene (101) angeordnet sind und elektrisch mit einem ersten Sammelleiter und einem zweiten Sammelleiter verbunden sind, die jeweils zu dem ersten und zweiten Satz von drei Sammelleitern gehören.

2. Substation nach Anspruch 1, **dadurch gekennzeichnet, dass** die ersten und zweiten Unterbrechungs- und Trenneinrichtungen (150) in einer im Wesentlichen symmetrischen Position im Verhältnis zu der im Wesentlichen vertikalen Ebene (101) angeordnet sind.

3. Substation nach Anspruch 1, **dadurch gekennzeichnet, dass** die ersten und zweiten Unterbrechungs- und Trenneinrichtungen (150) beide einen ersten Verbindungsanschluss (13), der elektrisch mit dem ersten Sammelleiter verbunden ist, und einen zweiten Verbindungsanschluss (11), der elektrisch mit dem zweiten Sammelleiter verbunden ist, aufweisen.

4. Substation nach Anspruch 3, **dadurch gekennzeichnet, dass** sie eine Mehrzahl an Verbindungsstangen (50) aufweist, die geeignet sind, den ersten und zweiten Satz von drei Sammelleitern (200, 300) strukturell zu tragen, wobei jede der Verbindungsstangen aus einem leitfähigen Material hergestellt ist, damit die elektrische Verbindung zwischen einem Sammelleiter und dem entsprechenden Verbindungsanschluss hergestellt wird.

5. Substation nach Anspruch 1, **dadurch gekennzeichnet, dass** sie einen Portalstützpunkt (60) aufweist, der geeignet ist, den zweiten Satz von drei Sammelleitern (300) zu tragen.

6. Substation nach einem oder mehreren der vorgenannten Ansprüche, **dadurch gekennzeichnet, dass** die erste Unterbrechungs- und Trenneinrichtung (150) einen dritten Verbindungsanschluss (2) aufweist, der elektrisch mit einer Phase der Stromzuführleitung verbunden ist, und dass die zweite Unterbrechungs- und Trenneinrichtung (150) einen dritten Verbindungsanschluss (2) aufweist, der elektrisch mit einem Strom- und/oder Verteilertransformator verbunden ist.

7. Substation nach Anspruch 1, **dadurch gekennzeichnet, dass** die Trenneinheit (5) ein drehendes Element (8) aufweist, an dem die ersten und zweiten beweglichen Kontakte (33, 31) fest angebracht sind, und dass die ersten und zweiten Festkontakte (23, 21) jeweils auf der Drehebene der ersten und zweiten beweglichen Kontakte angeordnet sind.

8. Substation nach Anspruch 7, **dadurch gekennzeichnet, dass** der dritte bewegliche Kontakt (34) der Trenneinheit (5) fest auf der Abdeckung der Unterbrechungskammer (7) der Unterbrechungseinheit angebracht ist.

9. Substation nach Anspruch 8, **dadurch gekennzeichnet, dass** die Trenneinheit (5) einen vierten beweglichen Kontakt (32), der an dem drehenden Element (8) fest angebracht ist, einen entsprechenden vierten Festkontakt (22) mit Erdung, der sich auf der Drehebene des vierten beweglichen Kontakts befindet, und einen fünften Festkontakt mit Erdung, der mit dem dritten beweglichen Kontakt (34) gekoppelt werden kann, aufweist.

10. Substation nach Anspruch 7, **dadurch gekennzeichnet, dass** das drehende Element (8) von einem Elektromotor (9) angetrieben wird.

11. Substation nach Anspruch 1, **dadurch gekennzeichnet, dass** sie zumindest einen Messwandler (16, 17) aufweist, der sich in jedem der ersten und zweiten Unterbrechungs- und Trenneinrichtungen befindet.

## Revendications

1. Sous-station de transmission et de distribution d'énergie électrique pour des applications haute et/ou moyenne tension, ladite sous-station étant connectée à une ligne d'alimentation triphasée, **caractérisée en ce qu'**elle comprend :
- un premier ensemble de trois barres omnibus (200) et un deuxième ensemble de trois barres omnibus (300) qui sont mutuellement alignées dans un plan sensiblement vertical (101) ; et
- pour chaque phase de la ligne d'alimentation, un premier dispositif d'interruption et de déconnexion (150) et un deuxième dispositif d'interruption et de déconnexion (150) qui comprennent une enceinte (1) qui comprend un premier isolateur de traversée (40) contenant une première borne de connexion (13), un deuxième isolateur de traversée (41) contenant une deuxième borne de connexion (11) et un troisième isolateur de traversée (42) contenant une troisième borne de connexion (2) et qui contient une unité d'interruption (4) qui a un contact fixe (10) et un contact mobile (9), et une unité de déconnexion (5) qui comprend un premier contact fixe (23), un deuxième contact fixe (21) et un troisième contact fixe (24), chacun étant connecté à l'une correspondante des bornes de connexion (13, 11, 2), et un premier contact mobile (33), un deuxième contact mobile (31) et un troisième contact mobile (34) qui peuvent être accouplés aux contacts fixes correspondants, lesdits premier et deuxième dispositifs d'interruption et de déconnexion (150) étant agencés mutuellement opposés à des positions sensiblement symétriques par rapport au dit plan sensiblement vertical (101) et étant connectés électriquement à une première barre omnibus et une deuxième barre omnibus qui appartiennent respectivement aux dits premier et deuxième ensembles de trois barres omnibus.

2. Sous-station selon la revendication 1, **caractérisée en ce que** lesdits premier et deuxième dispositifs d'interruption et de déconnexion (150) sont agencés à des positions sensiblement symétriques par rapport au dit plan vertical (101).

3. Sous-station selon la revendication 1, **caractérisée en ce que** lesdits premier et deuxième dispositifs d'interruption et de déconnexion (150) ont tous deux une première borne de connexion (13), qui est connectée électriquement à ladite première barre omnibus, et une deuxième borne de connexion (11), qui est connectée électriquement à ladite deuxième barre omnibus.

4. Sous-station selon la revendication 3, **caractérisée en ce qu'**elle comprend une pluralité de tiges de connexion (50) qui sont appropriées pour supporter structurellement lesdits premier et deuxième ensembles de trois barres omnibus (200, 300), chacune desdites tiges de connexion étant réalisée en un matériau conducteur, de manière à réaliser la connexion électrique entre une barre omnibus et la borne de connexion correspondante.

5. Sous-station selon la revendication 1, **caractérisée en ce qu'**elle comprend un portique de support (60) qui est approprié pour supporter ledit deuxième ensemble de trois barres omnibus (300).

6. Sous-station selon une ou plusieurs des revendications précédentes, **caractérisée en ce que** ledit premier dispositif d'interruption et de déconnexion (150) comporte une troisième borne de connexion (2) qui est connectée électriquement à une phase de la ligne d'alimentation et ledit deuxième dispositif d'interruption et de déconnexion (150) comporte une troisième borne de connexion (2) qui est connectée électriquement à un transformateur de puissance et/ou de distribution.

7. Sous-station selon la revendication 1, **caractérisée en ce que** ladite unité de déconnexion (5) comprend un élément rotatif (8) auquel lesdits premier et deuxième contacts mobiles (33, 31) sont fixés rigidement, et **en ce que** lesdits premier et deuxième contacts fixes (23, 21) sont respectivement agencés dans le plan de rotation desdits premier et deuxième contacts mobiles.

8. Sous-station selon la revendication 7, **caractérisée en ce que** le troisième contact mobile (34) de l'unité de déconnexion (5) est fixé sur l'enceinte de la chambre d'interruption (7) de ladite unité d'interruption.

9. Sous-station selon la revendication 8, **caractérisée en ce que** ladite unité de déconnexion (5) comprend un quatrième contact mobile (32), qui est fixé rigidement au dit élément rotatif (8), un quatrième contact fixe (22) correspondant à une tension de masse, qui se trouve dans le plan de rotation dudit quatrième contact mobile, et un cinquième contact fixe à une tension de masse, qui peut être accouplé au dit troisième contact mobile (34).

10. Sous-station selon la revendication 7, **caractérisée en ce que** ledit élément rotatif (8) est actionné par un moteur électrique (9).

11. Sous-station selon la revendication 1, **caractérisée en ce qu'**elle comprend au moins un transformateur de mesure (16, 17) qui est agencé à l'intérieur de chacun desdits premier et deuxième dispositifs d'interruption et de déconnexion.
